# EUROPÄISCHE PATENTANMELDUNG

(11) **EP 2 253 456 A1**
(43) Veröffentlichungstag der Anmeldung: **24.11.2010**
(21) Anmeldenummer: 10005283.6
(22) Anmeldetag: 20.05.2010
(51) Int. Cl.: B29C 53/38, B29C 53/50, B29C 53/68, F16L 55/165

(54) **Auskleidungsschlauch für die Sanierung flüssigkeitsführender Leitungssysteme**

(30) Priorität: 22.05.2009 DE 102009022241
(71) Anmelder: Nicod Industrie Design UG, 68161 Mannheim (DE)
(72) Erfinder: Nicod, Morgan, 59300 Valenciennes (FR)
(74) Vertreter: Langfinger, Klaus Dieter

(57) **Zusammenfassung**

Auskleidungsschlauch zur Sanierung flüssigkeitsführender Leitungssysteme mit mindestens einem inneren Folienschlauch (1), mindestens einem äußeren Folienschlauch und zwischen mindestens einem inneren und mindestens einem äußeren Folienschlauch (12,13) angeordneten harzgetränkten Faserbändern (14), wobei mindestens ein innerer Folienschlauch mindestens eine Verbindungsnaht in longitudinaler Richtung aufweist und Verfahren zur Herstellung solcher Auskleidungsschläuche (16).

## Beschreibung

Die vorliegende Erfindung betrifft einen Auskleidungsschlauch zur Sanierung flüssigkeitsführender Leitungssysteme und ein Verfahren zur Herstellung der erfindungsgemäßen Auskleidungsschläuche.

Ein besonders elegantes Verfahren zur Sanierung von flüssigkeitsführenden Leitungssystemen, z.B. Kanälen und ähnlichen Rohrsystemen, besteht darin, dass man einen flexiblen, mit Reaktionsharz getränkten Faserschlauch, der als Auskleidungsschlauch (Liner) dient, in den Kanal einführt, dort aufbläst, so dass er sich eng an die Kanalinnenwand anschmiegt, und danach das Harz aushärtet.

Die Herstellung eines derartigen Auskleidungsschlauches ist beispielsweise in der WO 95/04646 beschrieben. Dabei wird auf einen Wickeldorn, der aus mehreren parallelen, in ihrem Abstand zur Wickeldornachse veränderbaren Wickelfingern besteht, zunächst ein Folienband schraubenförmig gewickelt, wobei ein als Schutzfolie dienender Innenfolienschlauch gebildet wird. Auf diesen wird mindestens ein harzgetränktes Faserband schräg gewickelt und darauf wiederum ein zweites Folienband, welches einen Außenfolienschlauch bildet.

In einer weiteren Ausführungsform werden auf eine vorgefertigte, flachgelegte nahtlose Schlauchfolie, welche direkt als Wickeldorn dient, die harzgetränkten Faserbänder gewickelt. Darauf werden dann zwei Längsfolienbänder abgelegt, die sich an ihren Längskanten überlappen, und dort miteinander verklebt oder verschweißt werden.

Nach dem in der DE-C 197 00 785 beschriebenen Verfahren wird eine nahtlose Innenschlauchfolie durch eine innen schwebende, mit einer von außen gesteuerten Antriebseinrichtung versehene Dornvorrichtung aufgeweitet, und darum werden dann die Faserbänder gewickelt. Nach Verlassen der Dornvorrichtung wird das Schlauchgebilde flachgelegt und mit einem als Außenfolie dienenden Hüllschlauch umgeben, der aus zwei, entlang ihren Längskanten miteinander verschweißten Folienbahnen bestehen kann.

Die genannten Verfahren sind mit mehreren Nachteilen behaftet. Beispielsweise ist die Konstruktion des Wickeldorns mit verstellbaren Wickeifingern recht kompliziert und anfällig, da deren Abstands- und Antriebsvorrichtungen sowie die übrigen Maschinenbauteile aufwändig veränderbar gestaltet sind.

Bei Anwendung einer flachen, vorgefertigten, nahtlosen Schlauchfolie als Wickeldorn muss diese, insbesondere bei der Herstellung langer Auskleidungsschläuche, vor dem Umwickeln mit den Faserbändern stark gestaucht werden, was zu Verknotungen und Verschlingungen und damit zu Störungen im Verfahrensablauf führen kann, so dass zum Beispiel lange Auskleidungsschläuche, die beispielsweise mehrere hundert Meter lang sind, nur sehr schwer herstellbar sind. Grundsätzlich ist bei der Verwendung vorgefertigter nahtloser Innenfolien eine Beschränkung bei der maximalen Länge der herstellbaren Auskleidungsschläuche gegeben, die unerwünscht ist.

Es sind auch Verfahren zur Herstellung von Auskleidungsschläuchen für die Kanalsanierung bekannt, bei denen harzgetränkte Faserbänder nicht auf den Innenfolienschlauch gewickelt, sondern überlappend längs auf diesen appliziert werden.

Nach GB-A 1 340 060 wird ein Auskleidungsschlauch hergestellt, indem oben und unten auf einen vorgefertigten, flachgelegten Innenfolienschlauch ein Band aus Fasermatten gelegt wird und die sich überlappenden Längskanten, z.B. durch Vernadeln, miteinander verbunden werden. Darauf werden dann zwei Deckfolien abgelegt, die miteinander verschweißt werden. Schließlich wird das Gebilde zu einem Schlauch aufgeweitet und in die Fasermatte wird härtbares Harz eingespritzt, was aber nicht zu einer homogenen Tränkung führen kann.

Nach EP-A 510 306 wird ein Auskleidungsschlauch hergestellt, indem um einen nahtlos extrudierten Innenfolienschlauch aus Polyvinylalkohol mehrere Schichten

Faservlies längs gegeneinander versetzt abgelegt und dann in einer Tränkwanne mit härtbarem Harz imprägniert werden. Anschließend wird das Gebilde von zwei Folien aus Polyvinylalkohol umhüllt, deren Ränder miteinander verschweißt werden.

Der vorliegenden Erfindung lag die Aufgabe zugrunde, die vorstehend geschilderten Nachteile der bekannten Auskleidungsschläuche zu vermeiden und verbesserte Auskleidungsschläuche der eingangs genannten Art und ein Verfahren zu deren Herstellung zur Verfügung zu stellen.

Diese Aufgabe wird erfindungsgemäß durch Auskleidungsschläuche gemäß Anspruch 1 gelöst. Bevorzugte Ausführungsformen sind den Unteransprüchen 2 bis 5 zu entnehmen.

Die erfindungsgemäßen Auskleidungsschläuche zur Sanierung flüssigkeitsführender Leitungssysteme weisen mindestens einen inneren und mindestens einen äußeren Folienschlauch sowie zwischen mindestens einem inneren und mindestens einem äußeren Folienschlauch angeordnete harzgetränkte Faserbänder auf. Dabei weist mindestens ein innerer Folienschlauch mindestens eine Naht in Iongitudinaler Richtung auf.

Vorzugsweise ist der mindestens eine innere Folienschlauch bzw. gegebenenfalls mehrere innere Folienschläuche aus thermoplastischem Kunststoff hergestellt. Geeignete thermoplastische Kunststoffe sind dem Fachmann an sich bekannt und in der Literatur beschrieben. Grundsätzlich eigene sich alle thermoplastischen Kunststoffe aus denen Folien oder Folienbänder entsprechender Dicke und Permeabilität hergestellt werden können. Aus wirtschaftlichen Gründen werden vorzugsweise Polyolefine, insbesondere Polyethylen oder Polypropylen oder Copolymer aus Ethen und Propen oder Verbundfolien aus Polyolefinen und Polyamiden verwendet. Letztere haben den Vorteil, dass diese eine verringerte Durchlässigkeit gegenüber organischen Lösungsmitteln, die im Harz, das zur Tränkung der Faserbänder verwendet wird, aufweisen, was bei der Einbringung des Auskleidungsschlauchs in das flüssigkeitsführende Leitungssystem ein Vorteil ist, da ein Austritt von Teilen des Harzes vor der Aushärtung die Homogenität dieser Aushärtung und damit die Eigenschaften des gehärteten Auskleidungsschlauchs negativ beeinträchtigt. Ein häufig in den Tränkharzen verwendetes Lösungsmittel ist beispielweise Styrol, weswegen zur Herstellung des einen oder der mehreren inneren Folienschläuche vorzugsweise styrolundurchlässige Verbundfolien verwendet werden. Polyethylen/Polyamid-Verbundfolien erfüllen diese Anforderungen in der Regel in ausreichendem Maß. Entsprechende Verbundfolien und Verfahren zu deren Herstellung sind an sich bekannt und in der Literatur beschrieben, so daß sich hier nähere Ausführungen erübrigen. Bei der Verwendung von mehreren inneren Folienschläuchen, d.h. mehreren inneren Folien vor der Aufbringung der harzgetränkten Faserbänder reicht es aus, wenn der mit den Faserbändern in Kontakt kommende innerer Folienschlauch die Undurchlässigkeit wie zuvor beschrieben aufweist; die weiter "innen" liegenden Folienschläuche, d.h. die die innere Oberfläche der erfindungsgemäßen Auskleidungsschläuche bildenden Folienschläuche, die nicht mit den harzgetränkten Faserbändern in Berührung kommen, können dann aus kostengünstigeren Polyolefinfolien hergestellt werden.

Erfolgt die Aushärtung des Harzes, mit dem die Faserbänder getränkt sind, mittels UV-Licht, wie beispielsweise in der EP-A 122 246 und der DE-A 19817413 beschrieben, ist es vorteilhaft, wenn der oder die Innenfolienschläuche gegenüber der Wellenlänge der zur Härtung verwendeten UV-Strahlung weitgehend transparent sind, um eine bestmögliche Effizienz der Aushärtung bei möglichst geringem Energieeintrag zu erreichen. Wird die UV-Strahlung von der oder den Innenfolienschläuchen zu stark absorbiert, ist eine zuverlässige Aushärtung ohne sehr hohen Energieeintrag, der sich wegen der Gefahr Iokaler Überhitzung nachteilig auf die mechanischen Eigenschaften des fertigen Auskleidungsschlauchs auswirken kann, nicht zu erreichen. Vorzugsweise liegt die Transparenz (Durchlässigkeit) des bzw. der inneren Folienschläuche bei mindestens 80, vorzugsweise bei mindestens 90, % für Strahlung der zur Aushärtung verwendeten Wellenlänge. Die Werte von 80% bzw. 90 % beziehen sich dabei auf die Gesamtdurchlässigkeit des inneren Aufbaus, d.h. bei Verwendung mehrerer innerer Folienschläuche wird die Durchlässigkeit des Gesamtaufbaus gemessen, da das zur Bestrahlung verwendete Licht alle inneren Folienschläuche passieren muss, um zur Stelle zu gelingen, wo die Aushärtung erfolgen soll. Dies ist dann bei Aufbau und Wahl der Materialien entsprechend zu berücksichtigen.

Erfindungsgemäß weist der mindestens eine Innenfolienschlauch, bzw. bei Verwendung mehrerer Innenfolienschläuche, die Gesamtheit der Innenfolienschläuche mindestens eine Naht in Iongitudinaler Richtung auf. Diese Naht rührt von der Verbindung, vorzugsweise Verschweißung von Folienbändern her, die zur Herstellung des bzw. der Innenfolienschläuche verwendet werden. Dabei kann für jeden Innenfolienschlauch jeweils ein oder zwei Folienbänder verwendet werden. Bei der Verwendung je eines Folienbandes für den Innenfolienschlauch bzw. die Innenfolienschläuche wird dieses Folienband nach der Zuführung mit einer geeigneten Vorrichtung so zusammengeklappt, dass die beiden Längskanten aufeinander zu liegen kommen und dann anschließend miteinander verbunden, vorzugsweise verschweißt werden können. Alternativ ist es auch möglich, für den oder die Innenfolienschläuche jeweils zwei Folienbänder zu verwenden und diese in Längsrichtung so aufeinanderzulegen, dass eine Verschweißung an den Längskanten erfolgen kann. In diesem Fall weist der fertige Innenfolienschlauch bzw. die fertigen Innenfolienschläuche zwei Nähte in longitudinaler Richtung auf. Dadurch dass die Innenfolienschläuche aus einem oder zwei Folienbändern und anschließende Verbinden, vorzugsweise Verschweißen in longitudinaler Richtung hergestellt werden, ist es entbehrlich, vor dem Aufwickeln der Faserbänder den bzw. die Innenfolienschläuche zu stauchen und es können einfach auch Auskleidungsschläuche beliebiger Länge hergestellt werden, ohne das Stauchungen, Verknotungen oder durch das Stauchen auftretende Beschädigungen des bzw. der Innenfolienschläuche zu befürchten sind. Da die Zuführung des bzw. der Folienbänder kontinuierlich erfolgen kann und der Schlauch unmittelbar vor Aufbringen der Faserbänder hergestellt wird, ist es prinzipiell sogar denkbar, in longitudinaler Richtung dem Innenfolienschlauch bzw. den Innenfolienschläuchen ein Profil unterschiedlichen Durchmessers in longitudinaler Richtung aufzuprägen, indem die Verbindun, vorzugsweise die Verschweißung entlang der Längskante bzw. den Längskanten entsprechend durchgeführt wird. Damit wird es auf konstruktiv einfache Art und Weise möglich, den Auskleidungsschlauch in seinem Querschnittsprofil an ein evtl. vorhandenes Profil des Leitungssystems anzupassen, welches saniert werden soll. Damit können dann Leitungssysteme mit in longitudinaler Richtung wechselnden Durchmessern mit exakt passenden Auskleidungsschläuchen saniert werden, ohne dass bei Durchmesserveränderungen eine Verringerung des Fließquerschnitts entsteht, welche dann zu erwarten ist, wenn vorgefertigte Innenfolienschläuche mit konstantem Durchmesser verwendet werden, da in diesem Fall sich der Durchmesser des Schlauchs am kleinsten Durchmesser des zu sanierenden Leitungssystem orientieren wird. Beim Aufweiten nach Einbringen des Liners eine ist Faltenbildung weitestgehend zu vermeiden, die zwangsläufig entstehen würde, wenn eine Folie nicht vollständig aufgeweitet wird) um die nachfolgende Aushärtung nicht zu erschweren.

Vorzugsweise wird die Verbindung (bevorzugt durch Verschweißung) so durchgeführt, dass die Naht eine Breite von weniger als 5 mm, vorzugsweise im Bereich von 1 bis 3 mm aufweist.

Die für die Herstellung des Innenfolienschlauchs bzw. der Innenfolienschläuche verwendeten Faserbänder sind vorzugsweise 20 bis 400 cm, insbesondere 50 bis 250 cm breit und weisen vorzugsweise eine Dicke von 0,01 bis 1, insbesondere 0,05 bis 0,5 mm auf. Die Breite der Folienbänder bestimmt sich nach dem Durchmesser des zu sanierenden Leitungssystems und danach, ob zur Herstellung des jeweiligen Innenfolienschlauchs ein oder zwei Folienbänder verwendet werden. Bei der Verwendung von einem Folienband muss dieses entsprechend breiter gewählt werden, um einen fertigen Schlauch des gewünschten Durchmessers zu erhalten.

Auf den mindestens einen Innenfolienschlauch bzw. bei Verwendung mehrerer Innenfolienschläuchen auf den jeweils äußeren dieser Innenfolienschläuche sind in den erfindungsgemäßen Auskleidungsschläuchen Faserbänder aufgebracht.

Als Faserbänder können Gewebe, Gelege, Matten, Nadelvliese und Filze aus Glas- oder Synthesefasern verwendet werden. Bevorzugt sind Glasfasergelege und Glasfasermatten. Entsprechende Produkte sind dem Fachmann bekannt und kommerziell im Handel erhältlich, so dass sich hier nähere Angaben erübrigen. Prinzipiell eigenen sich alle Materialen, die in der Literatur für die entsprechende Verwendung beschrieben sind. Sie werden auf an sich bekannte Weise mit flüssigem Reaktionsharz getränkt. Dies ist vorzugsweise ein ungesättigtes Polyesterharz oder ein Vinylester, die in Styrol und/oder einem Acrylester gelöst sind. Die Harze enthalten entweder einen Peroxidkatalysator, wenn die Härtung thermisch erfolgen soll, oder vorzugsweise einen Photoinitiator, wie z.B. in EP-A 23 623 beschrieben, wenn die Härtung durch UV-Licht erfolgen soll. Auch Kombinationen von Peroxid und Photoinitiator sind möglich, wie z.B. in EP-B 1 262 798 beschrieben.

Nach dem Tränken wird das Harz zweckmäßigerweise eingedickt, wie es z.B. in WO 2006/061129 beschrieben ist. Dadurch erhöht sich die Viskosität des Harzes und das damit getränkte Faserband ist besser handhabbar und wickelbar. Die Faserbänder sind vorzugsweise 30 bis 100 cm, insbesondere 40 bis 60 cm breit.

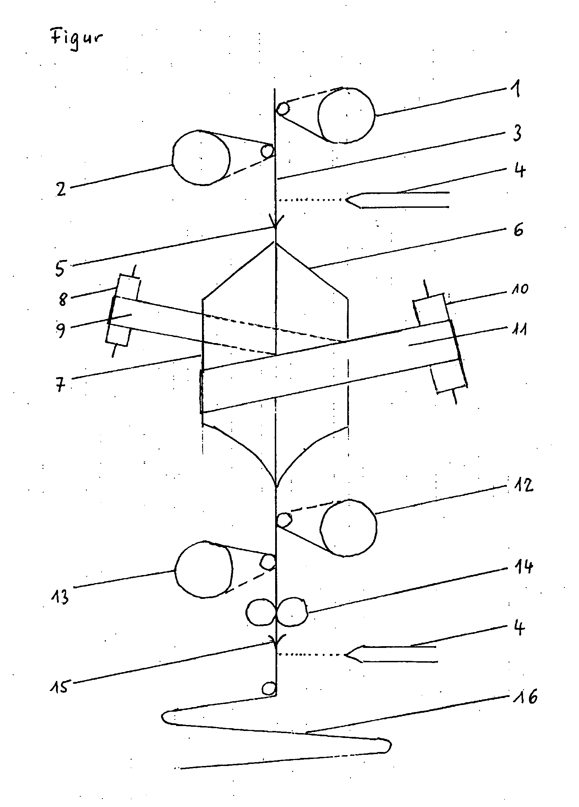

Um den Innenfolienschlauchwird mindestens ein Faserband gewickelt, vorzugsweise mehrere, bis zu maximal zehn Faserbänder, die gleichzeitig auf den Innenfolienschlauch aufgewickelt werden. Die Faserbänder werden vorzugsweise von Rollen abgezogen, die auf einem scheibenförmigen Gestell angebracht sind, welches sich um die Mittelachse des Wickelkern dreht, wie z.B. in WO 95/04646, Fig.2 erläutert. Bei mehreren Faserbändern sind die Rollen vorzugsweise kreisförmig µm einen Wickelkern angeordnet. Die Faserbänder überlappen sich an ihren Kanten, z.B. um 5 bis 300 mm. Vorzugsweise werden 1 bis 40, insbesondere 4 bis 20 Lagen übereinander gewickelt.

Nach einer bevorzugten Ausführungsform enthalten die erfindungsgemäßen Auskleidungsschläuche unmittelbar auf dem äußeren Innenfolienschlauch bevor die Faserbändern aufgebracht sind, zunächst ein dünnes Faservlies, beispielsweise aus Polyesterfasern, das gegebenenfalls auch mit Harz getränkt sein kann. Dieses Faservlies ist vorzugsweise für das zur Tränkung der Faserbänder verwendete Harz durchlässig, wodurch sich nach der Aushärtung und nachdem der Innenfolienschlauch herausgezogen ist, an der Innenoberfläche des Liners eine harzreiche Schicht bildet, die gegen aggressive und abrasive Abwässer beständig und bei Reinigung des Kanals mit Wasserhochdruck abriebfest ist.

Bei einer weiteren Variante kann auf die Faserbänder eine Zwischenfolie, z.B. aus Polyethylen oder ein weiteres Faservlies aufgebracht sein, die zur Stabilität, Dichtheit und Abstützung dient bzw. dienen.

Auf den Faserbändern ist in den erfindungsgemäßen Auskleidungsschläuchen mindestens ein äußerer Folienschlauch aufgebracht. Vorzugsweise enthält auch der äußere Folienschlauch mindestens eine, insbesondere zwei Verbindungsnähte in Iongitudinaler Richtung, die von der Verbindung der zur Herstellung des äußeren Folienschlauchs verwendeten Folienbänder entlang der Längsränder herrühren.

Vorzugsweise ist bzw. sind auch der bzw. die äußeren Folienschläuche aus thermoplastischem Kunststoff hergestellt. Wegen geeigneter Kunststoffe sei hier auf die zur Herstellung der Innenfolienschläuche verwendeten Materialien verwiesen, die auch hier geeignet und bevorzugt sind. Im Unterschied zur Innenfolie ist es bei der äußeren Folie jedoch vorteilhaft, wenn diese eine gute Sperrwirkung gegen UV-Strahlung, wie sie im sichtbaren Licht enthalten ist, hat, d.h. UV-Licht in signifikantem Umfang absorbiert. Dies ist wünschenswert, um eine vorzeitige Aushärtung des Harzes , mit dem die Faserbänder getränkt sind, aufgrund der UV-Strahlung im Sonnenlicht beispielsweise bei Lagerung oder Transport der erfindungsgemäßen Auskleidungsschläuche zu vermeiden. Insoweit hat die äußere Folie der erfindungsgemäßen Auskleidungsschläuche auch eine Schutzfunktion gegen UV-Strahlung.

Nach den erfindungsgemäßen Verfahren zur Herstellung eines Auskleidungsschlauches zur Sanierung flüssigkeitsgefüllter Leitungssysteme mit mindestens einem inneren Folienschlauch, mindestens einem äußeren Folienschlauch und zwischen mindesten einem inneren und mindestens einem äußeren Folienschlauch angeordneten harzgetränkten Faserbändern wird mindestens ein innerer Folienschlauch eingesetzt, der in longitudinaler Richtung mindestens eine Verbindungsnaht aufweist. Bei Verwendung mehrerer Innenfolienschläuche weisen vorzugsweise alle Innenfolienschläuche eine Verbindungsnaht in longitudinaler Richtung auf.

Bevorzugt ist der mindestens eine innere Folienschlauch aus einem thermoplastischen Kunststoff gefertigt. Wegen geeigneter thermoplastischer Kunststoffe wird auf die vorstehenden Ausführungen im Zusammenhang mit den erfindungsgemäßen Auskleidungsschläuchen verwiesen.

Die Verbindungsnaht entsteht durch die Verbindung der Längskanten eines oder zweier Folienbänder, die einer Wickelvorrichtung zugeführt werden, mit deren Hilfe auf den Innenfolienschlauch oder die Innenfolienschläuche Faserbänder gewickelt werden.

Die Zuführung der Faserbänder für die Herstellung des Innenfolienschlauchs bzw. der Innenfolienschläuche kann durch Abziehen von gegebenenfalls angetriebenen Rollen erfolgen. Bei Verwendung von nur einem Folienband pro Schlauch wird dieses flach so zusammengelegt (zusammengeklappt), dass die Längsränder aufeinander stoßen und sich berühren. Im Fall von zwei Folienbändern werden diese so zusammenfügt, dass sie jeweils an ihren Längsrändern aufeinander zu liegen kommen. In beiden Fällen werden die Kanten leicht zusammengepresst und im Abstand von z.B. vorzugsweise 2 bis 20 mm vom Rand erfindungsgemäß in longitudinaler Richtung miteinander verbunden, wodurch eine Verbindungsnaht bzw. zwei Verbindungsnähte in longitudinaler Richtung entstehen.

Zur Verbindung der Folienbänder eignen sich prinzipiell alle dem Fachmann für das Verbinden von Kunststofffolien geeigneten Verfahren wie Verkleben, Verschweißen oder Vernähen, wobei das Verschweißen sich als besonders vorteilhaft herausgestellt hat, das es zum einen sehr exakt erfolgen kann und zu Schweißnähten nicht zu großer Stärke führt und weil zum anderen die fertigen Folienschläuche auch die erforderliche Gas- und Flüssigkeitsdichtigkeit aufweisen, die erforderlich ist, wenn der Auskleidungsschlauch nach Einbringung in das zu sanierende Leitungssystem beispielsweise mit Druckwasser oder Druckluft aufgeweitet wird.

Als Schweißverfahren sind dem Fachmann als besonders geeignet das Elektro- und das Laserschweißen bekannt, wobei erfindungsgemäß das Laserschweißen besonders bevorzugt ist. Eine Verbindung durch Laserschweißen führt in der Regel zu dünneren und homogeneren Schweißnähten als es beim Elektroschweißen der Fall ist.

Das Laserschweißen erfolgt vorzugsweise mittels Laserpistolen, die im Abstand von bis zu etwa 50 cm von den zu verschweißenden Folien angeordnet sein können.

Der Laserstrahl wird vorzugsweise punktförmig auf die zu verschweißende Stelle gerichtet, die dadurch gebildete Schweißnaht kann z.B. bis zu 5 mm, vorzugsweise 1 bis 4 mm breit sein. Die Verschweißung ist sehr gleichmäßig und infolge des geringen, konzentrierten Energieeintrags der Laserstrahlen ergibt sich an der Schweißnaht auch kein thermisch bedingter Verzug, wie er bei der Eltktroschweißung häufiger zu beobachten ist.. Die geringe Bereite der schweißnaht ist vorteilhaft, weil dadurch die Härtung mittels UV-Licht nicht nachteilig beeinträchtigt wird.

In Abzugsrichtung hinter den Lasereinheiten ist vorzugsweise eine Sensorik angeordnet, durch welche die Schweißtemperatur, die Güte und die Vollständigkeit der Verschweißung überprüft werden können.

Vor der Aufbringung der Faserbänder wird der Innenfolienschlauch bzw. die Innenfolienschläuche aufgeweitet, indem er bzw. sie zweckmäßigerweise zunächst durch ein kegel- oder pyramidenförmiges Gestell auseinandergezogen und dann über einen damit verbundenen, beispielsweise haspelförmigen Wickelkern geführt wird. Der Wickelkern besteht in der Regel aus mehreren, vorzugsweise vier, sechs oder acht parallelen Längsführungen, die an ihren Enden kugelgelagerte Rollen aufweisen und bei größeren Kernen an einem Rohr als Mittelachse befestigt sind.

Bei kleineren Wickelkernen können die Längsführungen oben und unten an einem Stab oder Rohr befestigt sein. Die Rohre bzw. Stäbe führen in der Regel jeweils durch die ganze Vorrichtung hindurch; Sie sind außenseits fixiert, so dass der Wickelkern nicht mit der Schlauchfolie mitgezogen wird.

Der Durchmesser des Wickelkerns richtet sich nach dem Durchmesser des zu sanierenden Leitungssystems und beträgt vorzugsweise1 0 bis 250 cm, insbesondere 20 bis 150 cm, die Länge beträgt vorzugsweise 0,5 bis 5 m. Für jeden Kanal- bzw. Leitungsdurchmesser wird ein entsprechend dimensionierter Wickelkern bereitgestellt.

Um den Innenfolienschlauch, der über den Wickelkern gezogen wird, wird dann mindestens ein Faserband gewickelt, vorzugsweise mehrere, bis zu maximal zehn Faserbänder, die gleichzeitig auf den Innenfolienschlauch aufgewickelt werden. Die Faserbänder werden vorzugsweise wieder von Rollen abgezogen, die auf einem scheibenförmigen Gestell angebracht sind, welches sich um die Mittelachse des Wickelkerns dreht, wie z.B. in WO 95/04646, Fig.2 erläutert. Bei mehreren Faserbändern sind die Rollen vorzugsweise kreisförmig um den Wickelkern angeordnet. Die Faserbänder überlappen sich an ihren Kanten, z.B. um 5 bis 300 mm. Vorzugsweise werden 1 bis 40, insbesondere 4 bis 20 Lagen übereinander gewickelt.

Bei einer bevorzugten Variante dieser Ausführungsform wird auf den Wickelkern vor den Faserbändern zunächst ein dünnes Faservlies, beispielsweise aus Polyesterfasern, gewickelt, das gegebenenfalls auch mit Harz getränkt sein kann. Dieses Faservlies ist für Harz durchlässig, wodurch sich nach der Aushärtung und nachdem der Innenfolienschlauch herausgezogen ist, an der Innenoberfläche des Liners eine harzreiche Schicht bildet, die gegen aggressive und abrasive Abwässer beständig und bei Reinigung des Kanals mit Wasserhochdruck abriebfest ist. Das Faservlies wird ebenfalls von einer Rolle abgewickelt, die zusammen mit den Rollen für die Faserbänder auf der gleichen rotierenden Scheibe oder auf einer separaten Einrichtung angebracht ist.

Bei einer weiteren Variante kann auf die Faserbänder eine Zwischenfolie, z.B. aus Polyethylen oder ein weiteres Faservlies gewickelt werden, die zur Stabilität, Dichtheit und Abstützung dienen.

Anschließend legt sich der Hohlkörper durch sein Eigengewicht wieder flach, was durch Breitziehen mittels eines Flachformteils unterstützt werden kann. Auf diesen flachen Schlauch werden dann das Längsband bzw. die Längsbänder für den Außenfolienschlauch bzw. die Außenfolienschläuche appliziert, zusammengefügt und, wie oben ausgeführt, verbunden, vorzugsweise durch Laserbestrahlung verschweißt.

Vor oder vorzugsweise nach der Verbindung der Folienbänder vorzugsweise durch Verschweißen wird das flache Schlauchgebilde mittels Druckwalzenpaaren mit einer Geschwindigkeit von vorzugsweise 0,5 bis 5 m/min, insbesondere 1 bis 3 m/min abgezogen und gestapelt, beispielsweise in zickzackförmigen Lagen zusammengefaltet oder aufgewickelt.

Bei einer weiteren Ausführungsform der Erfindung werden harzgetränkte Faserbänder nicht auf den Kern gewickelt, sondern überlappend längs auf diesen von Rollen abgerollt, wie es z.B. in EP-A 876 898 beschrieben ist.

In der Zeichnung ist die Abfolge der Verfahrensschritte bei einer bevorzugten Ausführungsform der Erfindung schematisch dargestellt, wobei die bevorzugte Variante dargestellt ist, bei der jeweils zwei Folienbahnen miteinander verschweißt werden. Es ist nur eine harzgetränkte Faserbahn mit der dazugehörenden Abzugsrolle dargestellt, außerdem ein Faservlies mit der dazu gehörenden Abzugsrolle. Die Bezugsziffern haben dabei folgende Bedeutung:
- 1: Abwickelrolle für die obere Folienbahn (für den Innenfolienschlauch)
- 2: Abwickelrolle für die untere Folienbahn (für den Innenfolienschlauch)
- 3: Durchgehendes Mittelachsen- Rohr
- 4: Laserpistolen
- 5: Flach liegender Innenfolienschlauch
- 6: Kegelförmiges Aufweitgestell
- 7: Wickelkern
- 8: Abwickelrolle für das Faservlies
- 9: Faservlies
- 10: Abwickelrolle für das Faserband
- 11: Harzgetränktes Faserband
- 12: Abwickelrolle für die obere Folienbahn (für den Außenfolienschlauch)
- 13: Abwickelrolle für die untere Folienbahn (für den Außenfolienschlauch)
- 14: Druckwalzenpaar zum Abziehen
- 15: Flachgelegter fertiger Auskleidungsschlauch
- 16: Gestapelter Auskleidungsschlauch

Die erfindungsgemäßen Auskleidungsschläuche lassen sich in großer Länge einfacher herstellen als die bekannten Auskleidungsschläuche für die Sanierung flüssigkeitsführender Leitungssysteme, insbesondere von Kanalsystemen. Zudem ist eine flexiblere und einfachere Anpassung an evtl. vorhandene Querschnittsprofile der Leitungssysteme möglich.

Besonders bevorzugt eigene sich die erfindungsgemäßen Auskleidungsschläuche zur Sanierung von Kanal- und Abwassersystemen.

Der fertige Auskleidungsschlauch, der vorzugsweise1 bis 1000 m, insbesondere 30 bis 300 m lang sein kann, wird bei der eigentlichen Kanalsanierung in den Kanal eingeführt, dort z.B. mit Druckwasser oder vorzugsweise mit Luft aufgeblasen, so dass er sich eng an die Kanalinnenwand anschmiegt. Schließlich wird das Harz durch heißes Wasser thermisch oder vorzugsweise mittels UV-Licht, wie es z.B. in EP-A 122 246 und EP-A 198 17 413 beschrieben ist, gehärtet. Nach erfolgter Härtung wird der Innenfolienschlauch aus dem Kanal herausgezogen.

## Patentansprüche

1. Auskleidungsschlauch zur Sanierung flüssigkeitsführender Leitungssysteme mit mindestens einem inneren Folienschlauch, mindestens einem äußeren Folienschlauch und zwischen mindestens einem inneren und mindestens einem äußeren Folienschlauch angeordneten harzgetränkten Faserbändern, wobei mindestens ein innerer Folienschlauch mindestens eine Verbindungsnaht in longitudinaler Richtung aufweist.

2. Auskleidungsschlauch nach Anspruch 1, **dadurch gekennzeichnet, dass** mindestens ein innerer Folienschlauch aus thermoplastischem Kunststoff ist.

3. Auskleidungsschlauch nach Anspruch 1 oder 2 , **dadurch gekennzeichnet dass** mindestens ein äußerer Folienschlauch aus thermoplastischem Kunststoff ist.

4. Auskleidungsschlauch nach mindestens einem der Ansprüche 1 bis 3,
**dadurch gekennzeichnet, dass** der mindestens eine Innenfolienschlauch zwei Verbindungsnähte aufweist.

5. Auskleidungsschlauch nach mindestens einem der Ansprüche 1 bis 4,
**dadurch gekennzeichnet, dass** die mindestens eine Verbindungsnaht eine Breite von weniger als 5 mm aufweist.

6. Verfahren zur Herstellung eines Auskleidungsschlauches zur Sanierung flüssigkeitsführender Leitungssysteme mit mindestens einem inneren Folienschlauch, mindestens einem äußeren Follienschlauch und zwischen mindestens einem inneren und mindestens einem äußeren Folienschlauch angeordneten harzgetränkten Faserbändern, **dadurch gekennzeichnet, dass** mindestens ein innerer Folienschlauch eingesetzt wird, der in longitudinaler Richtung eine Verbindungsnaht in longitudinaler Richtung aufweist.

7. Verfahren nach Anspruch 6, **dadurch gekennzeichnet, dass** mindestens ein innerer Folienschlauch aus thermoplastischem Kunststoff eingesetzt wird.

8. Verfahren nach mindestens einem der Ansprüche 6 bis 7, **dadurch gekennzeichnet, dass** mindestens eine Verbindungsnaht des mindestens einen inneren Folienschlauchs durch Verschweissen hergestellt wird.

9. Verfahren nach Anspruch 8, **dadurch gekennzeichnet, dass** die mindestens eine Verbindungsnaht durch Laserschweißen hergestellt wird.

10. Verfahren nach mindestens einem der Ansprüche 6 bis 9 , **dadurch gekennzeichnet, dass** mindestens ein innerer Folienschlauch durch Zusammenklappen eines Längsbandes aus thermoplastischem Kunststoff und Verbinden der durch das Zusammenklappen entstandenen Doppellage entlang der Längsränder hergestellt wird.

11. Verfahren nach mindestens einem der Ansprüche 6 bis 9 , **dadurch gekennzeichnet, dass** mindestens ein innerer Folienschlauch durch Aufeinanderlegen zweier Längsbänder und anschliessende Verbindung der beiden Längsbänder in longitudinaler Richtung entlang der Ränder erfolgt.

12. Verfahren nach mindestens einem der Ansprüche 6 bis 12 **dadurch gekennzeichnet, dass** die harzgetränkten Faserbänder durch schräges und überlappendes Wickeln auf den mindestens einen inneren Folienschlauch aufgebracht werden.
